# EUROPEAN PATENT APPLICATION

(11) **EP 1 864 881 A1**
(43) Date of publication of application: **12.12.2007**
(21) Application number: 07109638.2
(22) Date of filing: 05.06.2007
(51) Int. Cl.: B60W 30/06, B60T 7/22, B62D 15/02, G05D 1/02, B60W 10/18, B60W 10/20

(54) **Vehicle steering system**

(30) Priority: 06.06.2006 JP 2006157715
(71) Applicant: JTEKT CORPORATION, Chuo-ku Osaka-shi Osaka 542-8502 (JP)
(72) Inventor: Maeda, Shingo JTEKT CORPORATION, Osaka-shi, Osaka 542-8502 (JP); Arima, Masanori JTEKT CORPORATION, Osaka-shi, Osaka 542-8502 (JP); Maeda, Naoki JTEKT CORPORATION, Osaka-shi, Osaka 542-8502 (JP); Yamanaka, Kosuke JTEKT CORPORATION, Osaka-shi, Osaka 542-8502 (JP); Isihihara, Atsushi JTEKT CORPORATION, Osaka-shi, Osaka 542-8502 (JP); Kouchi, Tatsuma JTEKT CORPORATION, Osaka-shi, Osaka 542-8502 (JP); Maeda, Daisuke JTEKT CORPORATION, Osaka-shi, Osaka 542-8502 (JP)
(74) Representative: TBK-Patent

(57) **Abstract**

In an automatic parking mode, a target path (40) is obtained, and a vehicle (31) is automatically controlled to follow the target path (40). When a driver intervenes steering of the vehicle, an anticipated course to be taken by the vehicle to follow after the intervention to the steering is calculated as a revised path (41). When the vehicle (31) follows the revised path (41), if the vehicle (31) is expected to be brought into contact with an obstacle (36), firstly, an alarm is raised. When an avoidance operation is performed after the alarm, an anticipated course to be taken by the vehicle to follow after the avoidance operation is re-calculated as a revised path (41). If no avoidance operation is performed or if the vehicle (31) is expected to be brought into contact with the obstacle (36) even when the vehicle (31) follows the revised path (41), forced brakes are applied to the vehicle (31), and the automatic parking control is halted.

## Description

### BACKGROUND OF THE INVENTION

The present invention relates to a vehicle steering system for automatically moving a vehicle in a desired direction, and more particularly to a vehicle steering system which can perform an automatic steering to park the vehicle in a desired parking position.

A technique is proposed in JP-A-5-58319 in which an automatic driving of a vehicle is realized by an automatic steering system and an automatic control is performed when the vehicle which is being driven is expected to contact with an obstacle.
In addition, a technique is disclosed in JP-A-10-114272 and JP-A-2006-21722 in which a vehicle steering system is automatically controlled so that a vehicle is guided to a parking position when a parking from back or parallel parking is performed.
According to the technique disclosed in JP-A-10-114272, an automatic parking control is cancelled when the driver manipulates a control member (a steering wheel) during the automatic parking control or his or her foot is released from the brake pedal. Namely, the automatic parking control is cancelled without any delay when the driver manipulates the relevant control members during the automatic parking control.

On the other hand, according to the technique disclosed in JP-A-2006-21722, the driver is permitted to manipulate the control member to intervene the automatic parking control, and when there is a fear that the manipulation by the driver is expected to cause the vehicle to be brought into contact with an obstacle, a control is performed so that the manipulation is made difficult to be done.

There has been realized no vehicle steering system in which in the case that the vehicle is being driven automatically by the vehicle steering system and the driver desires to intervene the automatic steering of the vehicle, the expected contact with the obstacle is avoided properly while permitting the intervention by the driver, and the automatic driving is properly associated with the manipulation by the driver for intervention of the automatic driving.
Namely, in the technique described in JP-A-5-58319, the involvement of the driver in the steering of the vehicle is not taken into consideration at all. In the technique described in JP-A-10-114272, when the driver is involved in the steering of the vehicle, the automatic control is cancelled on the spot. In the technique described in JP-A-2006-21722, although the involvement of the driver in steering the vehicle is allowed even while the automatic parking control is in operation, a large counterforce is generated against the manipulation of the control member (the steering wheel), so that the driver is made difficult to be involved smoothly in steering the vehicle.

### SUMMARY OF THE INVENTION

The invention has been made in view of the situations, and a main object of the invention is to provide a vehicle steering system in which when an automatic driving control is being performed by the vehicle steering system, the driver can intervene the steering of the vehicle, and in the case that the steering operation by the driver is inappropriate, the automatic steering can be made compatible with the manual manipulation by the driver by performing contact preventive processes in a plurality of stages according to the driving condition of the vehicle.

In addition, another object of the invention is to provide a vehicle steering system which permits an intervention by the driver to the steering of the vehicle in an automatic parking mode, which is easy to be handled and, moreover, which does not deteriorate the safety of the vehicle.

With a view to attaining the object, according to a first aspect of the invention, a vehicle steering system comprises:
a control member that is manipulated by a driver for controlling a direction of a vehicle;
a steering mechanism that turns a steered road wheel in response to manipulation of the control member;
an automatic driving mode setting unit that enables an automatic driving control for an automatic driving mode;
a path calculator that obtains as a target path a course on which the vehicle is to move from a current position to a target position while avoiding an obstacle under the automatic driving control;
a path recalculator that obtains, based on a fact that the steered road wheel is turned by the steering mechanism according to manipulation of the control member during the automatic driving control, as a revised path, an anticipated course to be taken by the vehicle when the vehicle moves to the target position after the steered road wheel is turned according to the manipulation of the control member;
an automatic steering controller that automatically controls the steering mechanism so that the vehicle follows one of the target path and the revised path in the automatic driving mode;
an alarming unit that outputs an alarm to the driver when the vehicle is expected to brought into contact with the obstacle when the vehicle follows the revised path; and
an automatic driving halting unit that stops the vehicle when the control member is not manipulated to avoid a contact with the obstacle after the alarm being outputted by the alarming unit.

According to the first aspect of the invention, when the automatic driving mode is set by the automatic driving mode setting unit, firstly, the target path is calculated by the path calculator for automatic driving control. The target path is a course that the vehicle is to take to travel while avoiding a contact with the obstacle when the vehicle moves from the current position to the target position.

In the automatic driving mode, the steering mechanism is controlled automatically, so that the vehicle travels in such a manner as to follow the target path. In this invention, even during the automatic driving control, the driver can manipulate the control member. Since the steered road wheels are turned according to the manipulation of the control member, the traveling direction of the vehicle is changed during the automatic driving control, and the vehicle deviates from the target path. The path recalculator calculates as the revised path the anticipated course to be taken by the vehicle when the vehicle moves to the target position after the steered road wheels are turned based on manipulation of the control member. Then, in the case that the obstacle exists on the revised path and the vehicle is expected to come into contact with the obstacle in case the vehicle moves to follow the revised path, firstly, the alarming is outputted. When the driver manipulates the control member based on the alarm so outputted so as to change the traveling direction of the vehicle, the revised path is recalculated based on the traveling direction which has resulted from the change.

In the case that the vehicle follows the revised path to thereby be brought into contact with the obstacle, firstly, the alarm is outputted as has been described above, and in the case that no operation for avoiding contact with the obstacle has been performed after the alarm being outputted or in the case that, although the operation for avoiding contact is performed, the vehicle is expected to come into contact with the obstacle as a result of following the revised path that is re-obtained by the path recalculator, the vehicle is stopped, and the automatic driving control is halted.

By performing the control like this, the intervention by the driver to the steering of the vehicle is permitted in the automatic driving mode, and the safe automatic driving control can be realized while reflecting the driver' s intention on the driving of the vehicle.
According to a second aspect of the invention, there is provided a vehicle steering system as set forth in the first aspect of the invention, in which the alarming unit outputs an alarm when a distance between the vehicle and the obstacle approaches a predetermined primary distance, and the automatic driving halting unit stops the vehicle when the distance between the vehicle and the obstacle approaches a predetermined secondary distance which is shorter than the primary distance.

According to the second aspect of the invention, when the vehicle which is following the revised path is expected to come into contact with the obstacle, in the case that the distance between the vehicle and the obstacle approaches the primary distance (the distance at which the vehicle is situated relatively far away from the obstacle), firstly, the alarm is outputted. And in the case that the distance between the vehicle and the obstacle approaches the secondary distance (at which the vehicle is situated relatively close to the obstacle), the vehicle is stopped. Consequently, even though there is a fear that the vehicle which is being automatically driven is brought into contact with the obstacle by the intervention by the driver to the automatic steering of the vehicle, in the case that the vehicle is not stopped immediately after the fear is generated but the driver is firstly given a caution, so that the driver changes the traveling direction of the vehicle so as to avoid a contact of the vehicle with the obstacle, the automatic driving control can be made to continue.

Consequently, the automatic driving control and the intervention by the driver to the automatic steering of the vehicle can be made compatible with each other with good balance.
According to a third aspect of the invention, there is provided a vehicle steering system as set forth in the first or second aspect of the invention, wherein the automatic driving mode includes an automatic parking mode in which the vehicle is moved to a parking position as the target position.

According to the third aspect of the invention, in particular, when the vehicle is moved at low speed to be parked, the steering system is provided with which the driver can park the vehicle in the desired parking position.

### BRIEF DESCRIPTION OF THE DRAWINGS

Fig. 1 is an illustration drawing which illustrates the configuration of a vehicle steering system according to an embodiment of the invention.

Fig. 2 is an illustration drawing which illustrates how to control the driving of a vehicle in an automatic parking mode, as an example of an automatic driving mode, for parking the vehicle in a predetermined position.

Fig. 3 is an illustration drawing which illustrates how to control driving of a vehicle in an automatic parking mode, as an example of an automatic driving mode, for parking the vehicle in a predetermined position.

Fig. 4 is a flowchart which illustrates contents of a controlling operation executed by a control unit in the automatic parking mode.

### DETAILED DESCRIPTION OF PREFERRED EMBODIMENTS

Hereinafter, an embodiment of the invention will be described in detail with reference to the accompanying drawings.

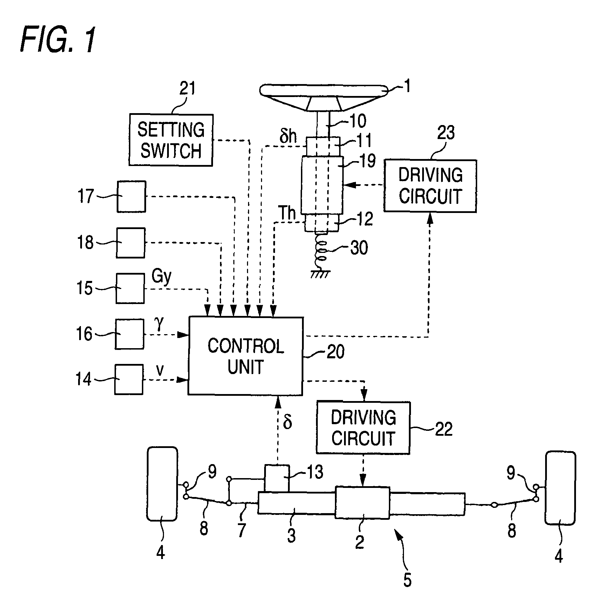

Fig. 1 is an illustration drawing which illustrates a configuration of a vehicle steering system according to an embodiment of the invention, and in the drawing, a configuration of a so-called steer-by-wire system is shown. The vehicle steering system includes a steering wheel 1 which is a control member that is manipulated by a driver for controlling the direction of the vehicle, a steering actuator 2 which is driven in response to rotational manipulation of the steering wheel 1 and a steering gear 3 which transmits the driving force of the steering actuator 2 to, for example, front left and right road wheels 4 as steered road wheels. No mechanical connection for mechanically transmitting a steering torque applied to the steering wheel 1 to the steering mechanism 5 is provided between the steering wheel 1 and a steering mechanism 5 including the steering actuator 2. The steering actuator 2 is controlled to be driven according to a manipulation amount (a manipulation angle or manipulating torque) of the steering wheel 1, so as to turn the road wheels 4.

The steering actuator 2 can be made up of an electric motor such as a known brushless motor. The steering gear 3 has a motion transforming mechanism for transforming a rotational motion of an output shaft of the steering actuator 2 into linear motions (linear motions in transverse directions of the vehicle) of steering rods 7. The lateral movements of the steering rods 7 are transmitted to the road wheels 4 via tie rods 8 and knuckle arms 9, so as to change toe angles (turning angles) of the road wheels 4. A known steering gear can be used for the steering gear 3, and there is no limitation on the configuration thereof, provided that the movement of the steering actuator 2 can be transmitted to the road wheels 4 in such a manner as to change the turning angles thereof. In addition, a wheel alignment is set such that the road wheels can returns to a straight-ahead position by a self aligning torque in a state that the steering actuator 2 is not driven.

The steering wheel 1 is connected to a rotational shaft 10 which is supported rotatably on a vehicle body side. A counterforce actuator 19 is provided on the rotational shaft 10 for generating a counterforce to be applied to the steering wheel 1. The counterforce actuator 19 can be made up of an electric motor such as a brushless motor which has an output shaft which is integrated with the rotational shaft 10.

An elastic member 30 for applying an elastic force in a direction in which the steering wheel 1 returns to the straight-ahead steering position is provided between the vehicle body and the rotational shaft 10. The elastic member 30 can be made up of, for example, a spring for applying an elastic force to the rotational shaft 10. When no torque is applied to the rotational shaft 10 by the counterforce actuator 19, the steering wheel 1 is allowed to return to the straight-ahead steering position by virtue of the elastic force of the elastic member 30.

An angle sensor 11 is provided for detecting a rotational angle δh of the rotational shaft 10 in order to detect a manipulation angle (a rotational angle) of the steering wheel 1. In addition, a torque sensor 12 is provided for detecting a torque transmitted by the rotational shaft 10 in order to detect a manipulation torque Th which is applied to the steering wheel 1 by the driver. A steered angle sensor 13 for detecting a steered angle (a turning angle produced by the steering mechanism 5) δ of the vehicle is made up of a potentiometer for detecting an operation amount of the steering rods 7 which correspond to the steered angle of the vehicle. A speed sensor 14 for detecting a vehicle velocity V, a lateral acceleration sensor 15 for detecting a lateral acceleration Gy of the vehicle and a yaw rate sensor 16 for detecting a yaw rate y of the vehicle are provided to the vehicle.

Furthermore, a rearview monitor camera 17 for picking up a rearview at the rear of the vehicle and an obstacle sensor 18 for emitting detection signals (for example, infrared rays or ultrasonic waves) to sides and obliquely rearward directions of the vehicle to detect obstacles lying to sides of the vehicle and in obliquely rearward positions of the vehicle and to detect distances to those obstacles so detected are provided to the vehicle.
The angle sensor 11, torque sensor 12, steered angle sensor 13, the speed sensor 14, lateral acceleration sensor 15 and yaw rate sensor 16 are connected to a control unit 20 which is made up of a computer. The control unit 20 is configured to control the steering actuator 2 and the counterforce actuator 19 via drive circuits 22, 23, respectively.

In addition, an automatic driving mode setting switch 21 is provided in a position where the driver can manipulate the switch.
When the automatic driving mode setting switch 21 is switched on, a signal which represents that the switch is on is given to the control unit 20, so that the vehicle steering system is automatically controlled by the control unit 20. In a case where the automatic driving mode is an automatic parking mode, detection outputs from the rearview monitor camera 17 and the obstacle sensor 18 are utilized.

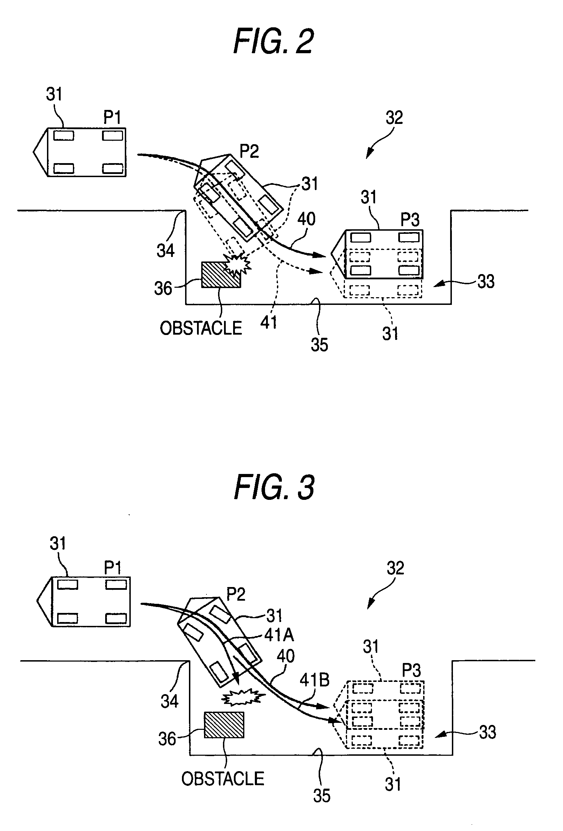

Figs. 2 and 3 are illustration drawings which explain how to control the driving of the vehicle in the automatic parking mode, which is an example of the automatic driving mode, for parking the vehicle in a predetermined position.
Firstly, referring to Fig. 2, a driving path is considered when a vehicle 31 reverses from a position P1 to a position P3 to be parked in the position P3. When the vehicle 31 which lies in the position P1 on a road 32 is to reverse to the position P3 within a parking space 33 which is recessed from the road 32, the vehicle 31 needs to be so reversed in such a manner as not to be brought into contact with a front right-hand side corner 34 of the parking space 33 and a left-hand side wall 35 of the parking space 33.

In addition, in the case that an obstacle 36 exists in the vicinity of a front left-hand side corner of the parking space 33, the vehicle 31 also needs to be reversed with care in such a manner as not to be brought into contact with the obstacle 36.
When the vehicle 31 is stopped in the position P1, a rearview at the rear of the vehicle 31 is picked up by the rearview monitor camera 17 (not shown in Fig. 2), so as to detect conditions of the parking space 33 to the parking position P3. Then, a course on which the vehicle is to reverse from P1 to P3 without being brought into contact with objects on the perimeter of the vehicle is calculated as a target path (which is simplified to be indicated by a thick solid line 40 in Fig. 2). Then, the vehicle steering system of the vehicle 31 is controlled automatically, whereby the vehicle 31 is allowed to reverse in such a manner as to follow the target path 40 so calculated.

It is assumed that the driver turns the steering wheel leftwards or counterclockwise because the driver thinks it better for the vehicle 31 to be parked closer to the left-hand side wall 35 of the parking space 33 when the vehicle is being parked in the position P3 while reversing the vehicle (namely, because the driver wants to park the vehicle 31 not in a position indicated by a solid line but in a position indicated by a broken line in P3).
In this case, an anticipated traveling course which the vehicle 31 is to take to reverse to the parking position P3 after the steered road wheels are turned is obtained as a revised path (which is simplified to be indicated by a thick broken line 41) based on the turning of the steered road wheels at a point in time at which the steering wheel is so manipulated.

Incidentally, when the vehicle 31 attempts to reverse to the parking position P3 in such a manner as to follow the revised path 41, as is indicated by a broken line, the vehicle 31 is expected to be brought into contact with an obstacle 36 at a rear left-hand side corner thereof.
In such a case, in the conventional automatic parking control, with brakes applied to the vehicle 31 in a forced fashion, the automatic driving control is configured to be halted, or a measure is adopted in which the steering wheel 1 is made difficult to be manipulated so that the vehicle 31 is not allowed to follow the revised path 41.

On the contrary to this, according to the embodiment of the invention, the vehicle 31 is controlled in such a manner as is shown in Fig. 3.
Referring to Fig. 3, in the vehicle 31, in order for the vehicle to be parked in the position P3 within the parking space 33, a target path 40 is calculated by the control unit 20 based on an image picked up by the rearview monitor camera (not shown) while the vehicle stays in the position P1. Then, the automatic driving control is applied to the vehicle 31 so that the vehicle reverses in such a manner as to follow the target path 40 so calculated. Then, assume that the driver manipulates the steering wheel to turn it leftwards or counterclockwise because the driver wants the vehicle 31 to be parked closer to the left-hand side wall 35 of the parking space 33 when the vehicle is being parked in the parking position P3 during the automatic driving control. The steered road wheels are then turned in response to the manipulation of the steering wheel by the driver, and an anticipated course which the vehicle 31 is to take to follow after the steered road wheels are turned is calculated as a revised path 41A.

Following this, when the vehicle 31 is caused to reverse in such a manner as to follow the revised path 41A, in the case that the rear left-hand side portion of the vehicle 31 is determined to be brought into contact with an obstacle 36 in the midst of reversing, the control unit 20 firstly raises an alarm so that the driver is warned of taking a contact avoidance action by manipulating the steering wheel.
When the driver turns the steering wheel, for example, rightwards or clockwise in response to the alarm so raised and the steered road wheels are turned based on the manipulation of the steering wheel by the driver, an anticipated course that the vehicle 31 is to take to follow after the steered road wheels are turned is obtained as a revised path (a re-revised path) 41B.

Then, when the vehicle 31 reverses in such a manner as to follow the re-revised path 41B, in the case that the vehicle 31 is determined not to be brought into contact with the obstacle 36, the vehicle 31 is caused to continue to reverse in such a manner as to follow the re-revised path 41B so that the vehicle 31 is parked in the parking position P3.
In the case that it is determined in the position P2 that the driver has not manipulated the steering wheel 1 or the re-revised path calculated after the manipulation of the steering wheel cannot avoid the anticipated contact with the obstacle 36 even though the steering wheel is manipulated, the vehicle 31 is forced to be stopped when the distance between the vehicle 31 and the obstacle 36 is decreased to a predetermined distance as a result of the vehicle 31 continuing to reverse, and the automatic driving control (the automatic parking control) is halted.

Thus, the invention is characterized in that in the case that the intervention by the driver to the steering of the vehicle is permitted during the automatic driving control (the automatic parking control) in the way described above and moreover, there is a fear that the vehicle is brought into contact with the obstacle as a result of the intervention by the driver, the alarm is raised as the countermeasures in the first step, and furthermore, if the vehicle approaches the obstacle, the vehicle is forced to be stopped as the countermeasure in the second step.

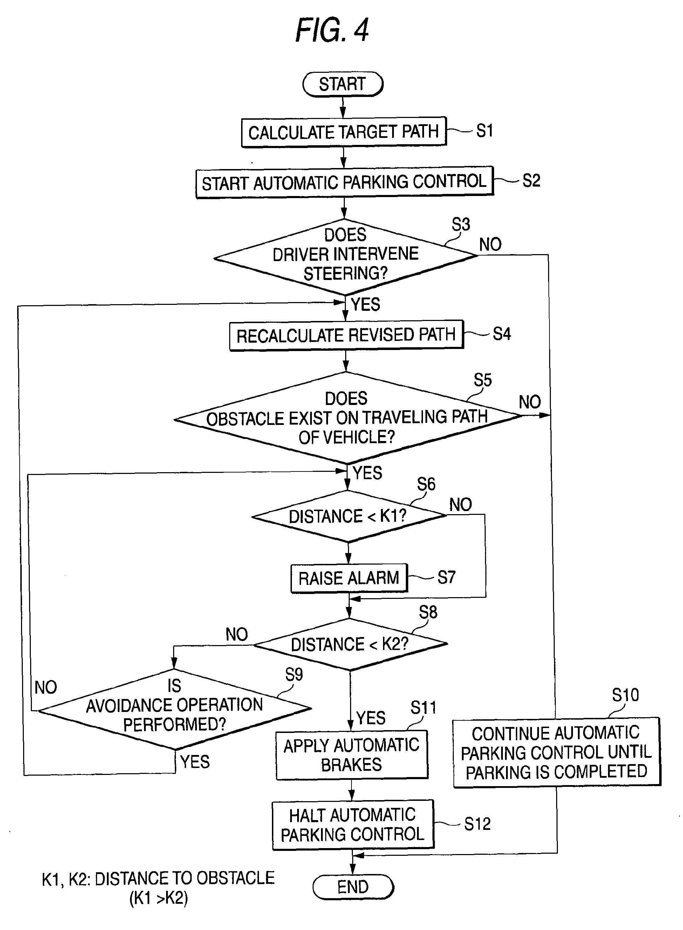

Fig. 4 is a flowchart which illustrates the contents of the controlling operation which is executed by the control unit 20 (refer to Fig. 1).

Next, referring to Fig. 4, a control procedure in the automatic parking mode will be described.
The driver of the vehicle 31 presses the automatic parking mode setting switch 21 (refer to Fig. 1) in the position P1 shown in Fig. 3, whereby the control unit 20 enters a mode for executing the automatic parking control.
In the automatic parking mode, firstly, the rearview monitor camera 17 is activated to pick up a view at the rear of the vehicle 31, and the view so picked up is displayed on a monitor screen within the vehicle 31. The driver designates a parking position (a target position) on the monitor screen while looking at the monitor screen in a confirming manner.

In place of designating the parking position (the target position) by the driver while looking at the monitor screen in the confirming manner, it is possible to automatically set the parking position (the target position) based on a difference in position coordinates between a current position of the vehicle 31 which is received by a GPS receiver and a parking position which is registered in advance.
When the parking position is designated, the control unit 20 obtains as a target path a course on which the vehicle is to move from the current position P1 to the parking position P3, that is, a course on which the vehicle is allowed to reverse without being brought into contact with an obstacle (step S1) .

Then, the control unit 20 starts the automatic parking control in such a manner that the vehicle 31 follows the target path 40 from the current position P1 to the parking position P3 (step S2) .
When the driver manipulates the steering wheel 1 during the automatic parking control (YES in step S3), the control unit 20 activates the steering actuator 2 via the drive circuit 22 in response to the manipulation of the steering wheel 1, so as to turn the road wheels 4.

In addition, in the case that the steering wheel 1 is manipulated (YES in step S3), a revised path is obtained based on a traveling or reversing direction of the vehicle 31 after the road wheels 4 are turned (step S4).
As a result, in the case that the revised path does not interfere with the obstacle 36 on the periphery of the vehicle 31, that is, the vehicle 31 does not interfere with the obstacle 36 (NO in step S5) if the vehicle 31 reverses along the revised path, the automatic parking control continues (step S10).

On the contrary, in the case that the revised path interferes with the obstacle, that is, the vehicle 31 is brought into contact with the obstacle (YES in step S5) if the vehicle 31 follows the revised path, whether or not a distance from the vehicle 31 to the obstacle 36 has reached a predetermined primary distance K1 is determined (step S6), and when the distance is determined to have so reached, an alarm is raised (step S7). In the case that the distance between the vehicle 31 and the obstacle 36 has not yet reached the distance K1, no alarm is raised (skipping step S7).

Furthermore, whether or not the distance between the vehicle 31 and the obstacle 36 has reached a predetermined secondary distance K2 which is shorter than the distance K1 is determined (step S8).
The distance between the vehicle 31 and the obstacle 36 can be detected based on an output of the obstacle sensor 18 as an example.
Then, whether or not the steering wheel 1 is manipulated by the driver to perform an avoidance operation is determined until the distance between the vehicle 31 and the obstacle 36 approaches K2 (step S9).

In the case that the avoidance operation is determined to have been performed, an anticipated course which the vehicle 31 is to take to follow after the avoidance operation is performed is recalculated as a re-revised path (step S4). Then, in the case that the vehicle is not brought into contact with the obstacle even though the vehicle follows the re-revised path so recalculated, the automatic parking control continues to be performed (step S10).
On the contrary, in the case that the vehicle is brought into contact with the obstacle when the vehicle follows the re-revised path, the processes in steps S6 to S9 will be repeated.

Furthermore, when the vehicle has approached the obstacle at the distance K2 (YES in step S8), brakes are automatically activated so as to apply forced brakes to the vehicle 31 (step S11). Then, the automatic parking control is halted (step S12), and this control is ended.
In the description of the embodiment that has been made heretofore, the automatic parking mode is taken as an example of the automatic driving control for description.

However, the invention is not limited to the automatic parking mode but can be applied, for example, to a technique in which when the vehicle is caused to automatically change driving lanes from a current vehicle position on a current driving lane on which the vehicle is being driven to a target position which is a vehicle position on a driving lane on which the vehicle is being driven after the relevant lane change, while the vehicle is being driven along a driving lane at relatively high speeds, the automatic driving control is used to implement the driving lane change from the current position to the target position.

In addition, the automatic driving control can also be utilized when the driver wants to automatically drive the vehicle from a current position to a target position in the normal driving of the vehicle. In this case, it is possible to establish a system in which a target position of the vehicle is made to be automatically set based on an output from a sonar for detecting the front of the vehicle, and the vehicle is kept driven while updating the target position of the vehicle so set.
Furthermore, while in the embodiment, the invention is described as being applied to the steer-by-wire system, the invention can widely be applied to vehicle steering systems in which a steering actuator is provided for imparting steering force to a steering mechanism of a vehicle. The vehicle steering systems like this includes electric power steering systems, hydraulic power steering systems and the like.

The embodiments described above are to be regard as illustrative rather than restrictive. Variations and changes may be made by others, and equivalents employed, without departing from spirit of the present invention. Accordingly, it is intended that all variation, changes and equivalents which fall within the spirit and scope of the present invention as defined in the claims be embraced thereby.
In an automatic parking mode, a target path is obtained, and a vehicle is automatically controlled to follow the target path. When a driver intervenes steering of the vehicle, an anticipated course to be taken by the vehicle to follow after the intervention to the steering is calculated as a revised path. When the vehicle follows the revised path, if the vehicle is expected to be brought into contact with an obstacle, firstly, an alarm is raised. When an avoidance operation is performed after the alarm, an anticipated course to be taken by the vehicle to follow after the avoidance operation is re-calculated as a revised path. If no avoidance operation is performed or if the vehicle is expected to be brought into contact with the obstacle even when the vehicle follows the revised path, forced brakes are applied to the vehicle, and the automatic parking control is halted.

## Claims

1. A vehicle steering system comprising:
a control member that is manipulated by a driver for controlling a direction of a vehicle;
a steering mechanism that turns a steered road wheel in response to manipulation of the control member;
an automatic driving mode setting unit that enables an automatic driving control for an automatic driving mode;
a path calculator that obtains as a target path a course on which the vehicle is to move from a current position to a target position while avoiding an obstacle under the automatic driving control;
a path recalculator that obtains, based on a fact that the steered road wheel is turned by the steering mechanism according to manipulation of the control member during the automatic driving control, as a revised path, an anticipated course to be taken by the vehicle when the vehicle moves to the target position after the steered road wheel is turned according to the manipulation of the control member;
an automatic steering controller that automatically controls the steering mechanism so that the vehicle follows one of the target path and the revised path in the automatic driving mode;
an alarming unit that outputs an alarm to the driver when the vehicle is expected to brought into contact with the obstacle when the vehicle follows the revised path; and
an automatic driving halting unit that stops the vehicle when the control member is not manipulated to avoid a contact with the obstacle after the alarm being outputted by the alarming unit.

2. The vehicle steering system according to claim 1, wherein
the alarming unit outputs an alarm when a distance between the vehicle and the obstacle approaches a predetermined primary distance, and
the automatic driving halting unit stops the vehicle when the distance between the vehicle and the obstacle approaches a predetermined secondary distance which is shorter than the primary distance.

3. The vehicle steering system according to claim 1, wherein the automatic driving mode includes an automatic parking mode in which the vehicle is moved to a parking position as the target position.

4. A method of controlling a vehicle steering system including a control member that is manipulated by a driver for controlling a direction of a vehicle and a steering mechanism that turns a steered road wheel in response to manipulation of the control member, the method comprising:
enabling an automatic driving control for an automatic driving mode;
obtaining as a target path a course on which the vehicle is to move from a current position to a target position while avoiding an obstacle under the automatic driving control:
obtaining, based on a fact that the steered road wheel is turned by the steering mechanism according to manipulation of the control member during the automatic driving control, as a revised path, an anticipated course to be taken by the vehicle when the vehicle moves to the target position after the steered road wheel is turned according to the manipulation of the control member;
automatically controlling the steering mechanism so at the vehicle follows one of the target path and the revised path in the automatic driving mode;
outputting an alarm to the driver when the vehicle is expected to brought into contact with the obstacle when the vehicle follows the revised path; and
stopping the vehicle when the control member is not manipulated to avoid a contact with the obstacle after the alarm being outputted.
